# DEMANDE DE BREVET EUROPEEN

(11) **EP 1 298 786 A1**
(43) Date de publication de la demande: **02.04.2003**
(21) Numéro de dépôt: 02292268.6
(22) Date de dépôt: 17.09.2002
(51) Int. Cl.: H02P 6/16

(54) **Dispositif à commutation électronique commandé par impulsions**

(30) Priorité: 26.09.2001 FR 0112380
(71) Demandeur: S.N.R. ROULEMENTS, 74010 Annecy Cédex (FR)
(72) Inventeur: Desbiolles, Pascal, 74570 Thorens-Glieres (FR); Nicot, Christophe, 74600 Quintal (FR); Friz, Achim, 74600 Seynod (FR)
(74) Mandataire: Geismar, Thierry

(57) **Abrégé**

L'invention concerne un moteur à commutation électronique (1) comprenant P phases et N paires de pôles, dans lequel un codeur multipolaire circulaire (12) est associé à la bague tournante (6a) d'un roulement (6), ledit codeur (12) comprenant une piste multipolaire principale (12a) et une piste multipolaire de commutation (12b) comprenant 2*P*N singularités (12b1-12b6) équiréparties angulairement et un dispositif de commande comprenant un capteur fixe (15) apte à délivrer des signaux digitaux A, B carrés en quadrature et C sous forme de 2*P*N impulsions par tour du codeur (12), un circuit de commutation (20) des courants dans les enroulements de phase du moteur (1) et un circuit de commande (21) du circuit de commutation (20).

## Description

L'invention concerne un moteur à commutation électronique comprenant P phases et N paires de pôles.

Du fait de leur puissance massique importante, les moteurs à commutation électronique, ou moteur brushless, peuvent être utilisés pour commander la rotation d'un organe mécanique dans un grand nombre d'applications.

Un exemple particulier d'une telle application concerne les systèmes de direction assistée de type électrique dans lesquels un moteur à commutation électronique peut être intégré de sorte à permettre l'application d'un couple d'assistance pour le déplacement angulaire des roues d'un véhicule.

En variante, et dans le cas d'un système de direction découplée de type « steer by wire » dans lequel il n'existe pas de liaison mécanique directe entre le volant et les roues du véhicule mais seulement une connexion électrique, un moteur à commutation électronique peut être disposé sous le volant de sorte à restituer l'effort de direction au niveau du volant. En variante un moteur peut être intégré, éventuellement en plus de celui mentionné ci-dessus, de sorte à assurer le déplacement angulaire des roues du véhicule.

Dans le cadre de son application, il est nécessaire de commander précisément la commutation du courant dans les phases de ces moteurs afin d'obtenir un couple qui soit optimal et égal à une consigne avec le moins de modulations possibles.

Pour ce faire, il est connu d'utiliser un capteur comprenant trois éléments sensibles disposés en regard d'un codeur comportant N paires de pôles, ledit codeur étant mis en rotation par le moteur.

Dans le cas d'un moteur triphasé, en prévoyant que les trois éléments sensibles soient déphasés l'un par rapport à l'autre d'un angle mécanique permettant de fournir trois signaux électriques déphasés de 120° électriques, il est possible de commander la commutation entre les phases du moteur au moment opportun.

Mais ce type de réalisation peut provoquer des modulations du couple du moteur qui sont notamment dues :
- au couple de réluctance du moteur ;
- aux défauts de commutation du courant d'une phase à l'autre en fonction de la vitesse de rotation du moteur ;
- l'absence de chevauchement des FEM trapézoïdales.

On connaît, notamment du document FR-2 749 452, un dispositif de commande d'un moteur électrique à commutation électronique qui permet de s'affranchir partiellement des défauts de couple liés à la commutation du courant d'une phase à l'autre.

Mais, pour s'affranchir de la modulation de couple liée à la conception du moteur (couple de réluctance et absence de chevauchement des FEM trapézoïdales), il devient alors nécessaire de connaître finement la position absolue du rotor pour contrôler le courant dans les phases en fonction de la position du rotor.

Une telle stratégie de commande nécessite donc un capteur supplémentaire donnant une position haute résolution en plus de celui pilotant la commutation.

Ce type de solution, en prévoyant deux capteurs, conduit à des contraintes d'intégration importantes et à un coût non optimisé. En outre, elle peut être pénalisante en terme d'inertie mécanique du rotor.

L'invention vise notamment à résoudre ces inconvénients en proposant un moteur à commutation électronique dans lequel l'un des roulements permettant la rotation du rotor porte un codeur à deux pistes qui est mobile en rotation devant un capteur unique fixe en rotation, ledit capteur étant apte, après traitement par un dispositif de commande, à délivrer d'une part des signaux de commutation du courant dans les phases et d'autre part des signaux de position haute résolution pour permettre le pilotage du courant alimentant les phases, et ce avec une résolution suffisamment fine pour éviter les modulations de couple du moteur.

En outre, le moteur suivant l'invention ne nécessite que peu de modification mécanique par rapport aux moteurs classiques, tout en intégrant un dispositif de commande de la commutation du courant entre les phases du moteur qui est performant.

A cet effet, l'invention propose un moteur à commutation électronique comprenant P phases et N paires de pôles, ledit moteur comprenant :
- un rotor portant les N paires de pôles et un stator portant P bobines formées respectivement d'un enroulement de phase, ledit rotor étant monté en rotation à l'intérieur du stator par l'intermédiaire d'au moins un roulement, ledit roulement comprenant une bague fixe, une bague tournante associée au rotor et des corps roulants disposés entre lesdites bagues ; et
- un dispositif de commande de la commutation du courant entre les phases du moteur ;
ledit moteur comprenant en outre :
- un codeur multipolaire circulaire associé à la bague tournante d'un roulement, ledit codeur comprenant une piste multipolaire principale et une piste multipolaire de commutation comprenant 2*P*N singularités équiréparties angulairement, les pistes principale et de commutation étant concentriques sur le codeur ; et
- un dispositif de commande comprenant :
   - un capteur fixe disposé en regard et à distance d'entrefer du codeur, ledit capteur comprenant au moins trois éléments sensibles dont au moins deux sont positionnés en regard de la piste principale de sorte à délivrer des signaux digitaux A, B carrés en quadrature et au moins un est positionné en regard de la piste de commutation de sorte à délivrer un signal C sous forme de 2*P*N impulsions par tour du codeur ;
   - un circuit de commutation des courants dans les enroulements de phase du moteur comportant 2*P*N interrupteurs ;
   - un circuit de commande du circuit de commutation qui :
      - à partir du signal C fournit des signaux de commutation des interrupteurs ; et
      - à partir des signaux A, B et en fonction d'une première consigne de courant définit une deuxième consigne de courant qui pilote le courant alimentant les enroulements de phase du moteur.

D'autres objets et avantages de l'invention apparaîtront au cours de la description qui suit, faite en référence aux dessins annexés, dans lesquels :
- la figure 1 est une représentation synoptique d'un dispositif de commande d'un moteur à commutation électronique comprenant 3 phases et une paire de pôles ;
- la figure 2 est une vue schématique de face d'un codeur utilisable devant le capteur du dispositif de commande de la figure 1 ;
- la figure 3 représente les signaux A, B et C délivrés par le capteur lors de la rotation du codeur représenté sur la figure 2 ;
- la figure 4 est une vue en coupe longitudinale d'un moteur à commutation électronique suivant l'invention;
- la figure 5 est une vue de face de la disposition de l'ensemble formé du roulement portant le codeur et du capteur, dans le moteur de la figure 4 ;
- la figure 6 est une vue en perspective du capteur de la figure 4.

L'invention concerne un moteur à commutation électronique 1 ou moteur brushless comprenant P phases.

Ce type de moteur comprend typiquement un rotor 2 portant N paires de pôles magnétiques Nord/Sud et un stator 3 portant P bobines formées respectivement d'un enroulement de phase, le rotor 2 étant mis en rotation de façon connue en commandant l'alimentation électrique dans les P enroulements de phases.

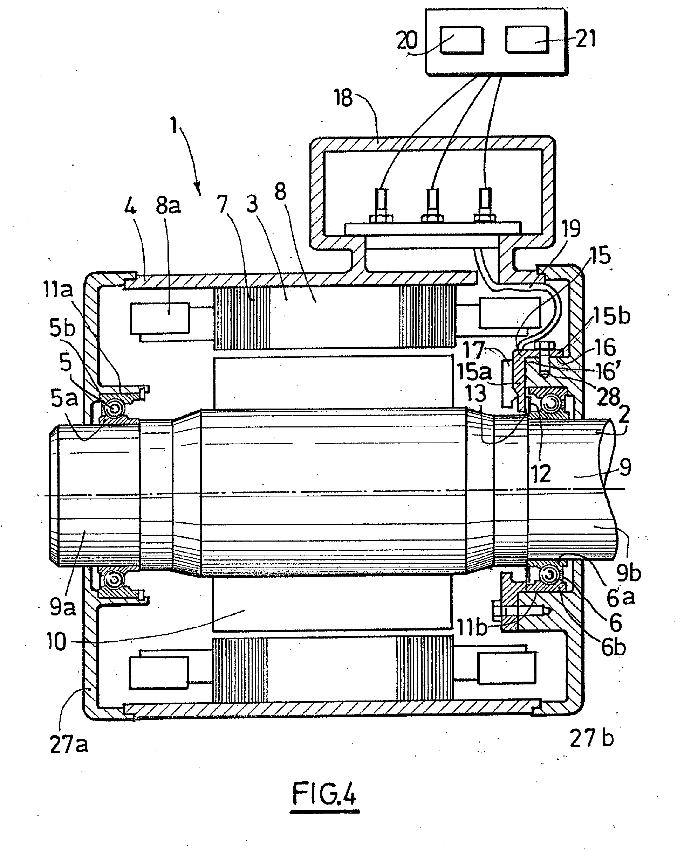

Dans le mode de réalisation représenté sur la figure 4, le moteur 1 comprend un boîtier 4 dans lequel d'une part est logé le stator 3 de façon fixe et d'autre part est monté en rotation le rotor 2 par l'intermédiaire de deux roulements 5, 6.

Le stator 3 comprend des tôles de guidage 7 du flux sur lesquelles sont enroulées les bobines 8 avec, à chaque extrémité du stator 3, une tête de bobine 8a.

Le rotor 2, disposé à l'intérieur du stator 3, comprend un axe 9 sur la partie centrale duquel sont disposés les aimants 10 formant les N paires de pôles magnétiques.

De part et d'autre des aimants 10, la bague intérieure tournante 5a, 6a d'un roulement 5, 6 est emmanchée sur respectivement des parties 9a et 9b de l'axe 9 de sorte à assurer la rotation de celui-ci. A cet effet, les bagues extérieures 5b, 6b des roulements 5, 6 sont disposées respectivement dans un logement 11a, 11b d'un flasque 27a, 27b associé au boîtier 4 pour être fixes par rapport à lui.

Dans le mode de réalisation représenté sur la figure 4, un codeur 12 est associé à la bague intérieure 6a d'un roulement 6 pour être entraîné en rotation par elle. A cet effet, le codeur 12 peut être surmoulé sur une armature annulaire 13 emmanché sur la bague intérieure 6a.

Le codeur 12 comprend une piste principale 12a et une piste de commutation 12b comprenant 2*P*N singularités 12b1-12b6 équiréparties angulairement, les pistes principale 12a et de commutation 12b étant disposées concentriquement sur le codeur 12.

Dans un exemple particulier, le codeur 12 est formé d'un anneau magnétique multipolaire sur lequel est aimantée une pluralité de paires de pôles Nord et Sud 14 équiréparties avec une largeur angulaire constante de sorte à former les pistes principale 12a et de commutation 12b, une singularité magnétique 12b1-12b6 de la piste de commutation 12b étant formée de deux paires de pôles qui sont différentes des autres.

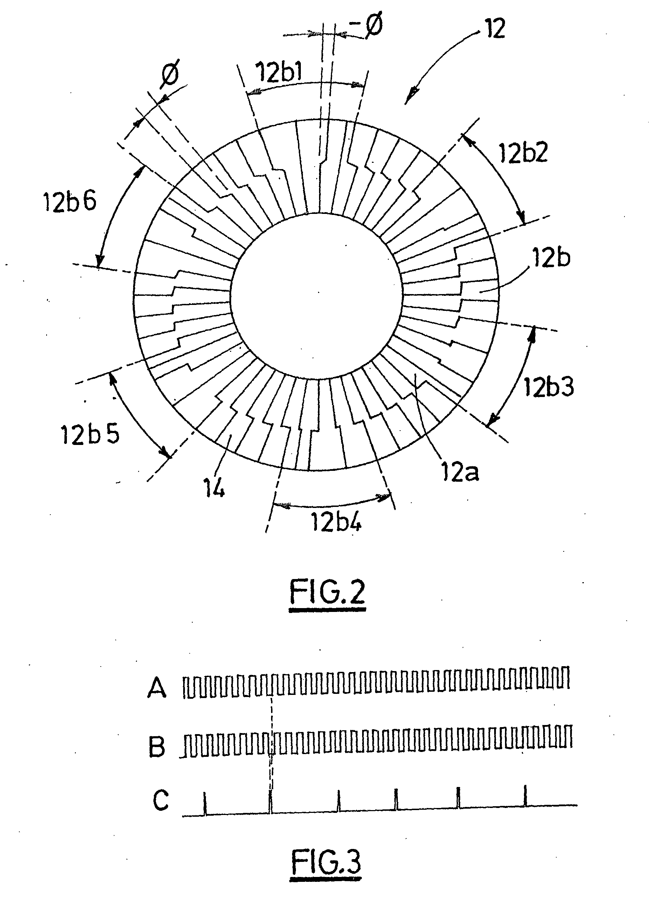

Dans le mode de réalisation particulier représenté sur la figure 2, les pistes principale 12a, disposée vers l'intérieur de l'anneau, et de commutation 12b, disposée vers l'extérieur de l'anneau, comprennent 24 paires de pôles. Les paires de pôles 14 de la piste de commutation 12b sont en avance de phase d'une valeur φ, par exemple égale à un huitième de période, par rapport à celles de la piste principale 12a.

Dans ce cas où P=3 et N=1, la piste de commutation 12b comprend 6 singularités magnétiques 12b1-12b6 espacées de deux paires de pôles les unes des autres. Chaque singularité est formée de deux paires de pôles 14, la largeur des pôles étant agencée pour qu'ils soient respectivement déphasés de φ, 0, -φ et 0 par rapport aux pôles correspondants de la piste principale 12a. Ainsi, comme on le verra par la suite, chaque impulsion du signal C correspond à la détection d'une inversion de déphasage entre la piste principale 12a et la piste de commutation 12b.

Le moteur comprend en outre un dispositif de commande de la commutation du courant entre les phases du moteur.

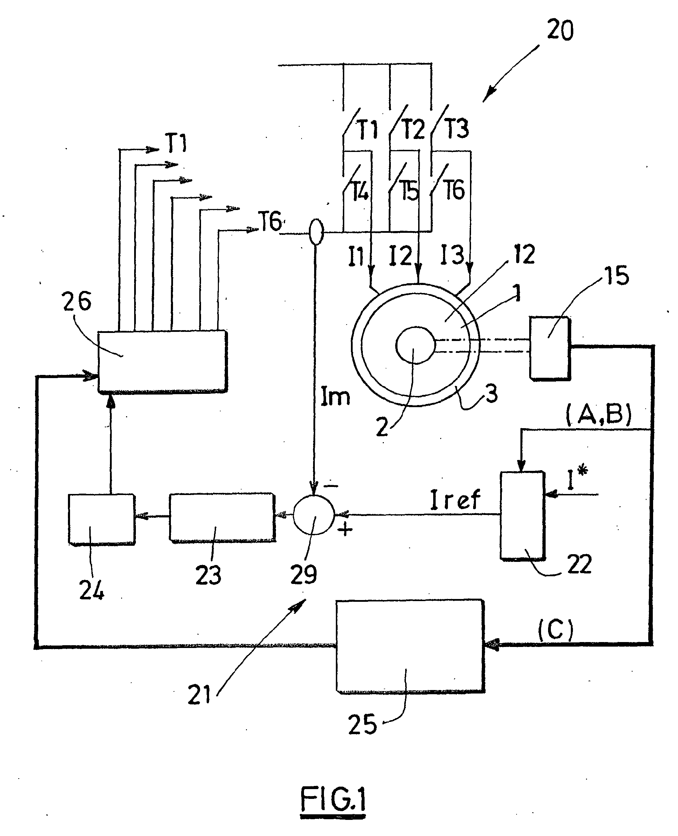

Sur la figure 1 est représenté un schéma synoptique d'un dispositif de commande d'un moteur 1 à trois phases et une paire de pôles.

Le dispositif de commande comprend un capteur 15 fixe disposé en regard et à distance d'entrefer du codeur 12.

Le capteur 15 comprend au moins trois éléments sensibles dont au moins deux sont positionnés en regard de la piste principale 12a et au moins un est positionné en regard de la piste de commutation 12b.

Dans un exemple particulier, les éléments sensibles sont choisis parmi le groupe comprenant les sondes à effet Hall, les magnétorésistances, les magnétorésistances géantes.

Le capteur 15 utilisé est apte à délivrer deux signaux électriques S1, S2 périodiques en quadrature par l'intermédiaire des éléments sensibles disposés en regard de la piste principale 12a et un signal électrique S3 par l'intermédiaire des éléments sensibles disposés en regard de la piste de commutation 12b.

Le principe d'obtention des signaux S1 et S2 à partir d'une pluralité d'éléments sensibles alignés est par exemple décrit dans le document FR-2 792 403 issu de la demanderesse.

Mais des capteurs 15 comprenant deux éléments sensibles qui sont aptes à délivrer les signaux S1 et S2 sont également connus.

Le capteur 15 comprend en outre un circuit électronique qui, à partir des signaux S1, S2 et S3, délivre des signaux digitaux A, B carrés en quadrature et C sous forme de 6 (P=3 et N=1) impulsions électriques par tour du codeur 12 (voir figure 3).

Un principe d'obtention des signaux digitaux A, B et C, ainsi que différents modes de réalisation des singularités magnétiques 12b1-12b6, sont décrits dans les documents FR- 2 769 088 et EP-0 871 014.

Par un traitement électronique adapté des signaux A, B et C, il est possible d'obtenir finement la vitesse de rotation, la position angulaire et/ou le sens de rotation du codeur 12 par rapport au capteur 15, et donc du rotor 2 par rapport à un point fixe.

Suivant une réalisation, le capteur 15 comprend en outre un interpolateur, par exemple du type décrit dans le document FR-2 754 063 issu de la demanderesse, permettant d'augmenter la résolution des signaux de sortie.

Le capteur 15 peut être intégré sur un substrat en silicium ou équivalent par exemple AsGa, de sorte à former un circuit intégré et personnalisé pour application spécifique, circuit parfois désigné sous le terme ASIC pour faire référence au circuit intégré conçu partiellement ou complètement en fonction des besoins.

Bien que la description soit faite en relation avec un ensemble codeur/capteur magnétique, il est également possible de mettre en oeuvre l'invention de façon analogue en utilisant une technologie de type optique. Par exemple, le codeur 12 peut être formé d'une cible en métal ou en verre sur laquelle les pistes de référence et de commutation ont été gravées de sorte à former un motif optique analogue au motif magnétique multipolaire exposé ci-dessus, les éléments sensibles étant alors formés de détecteurs optiques.

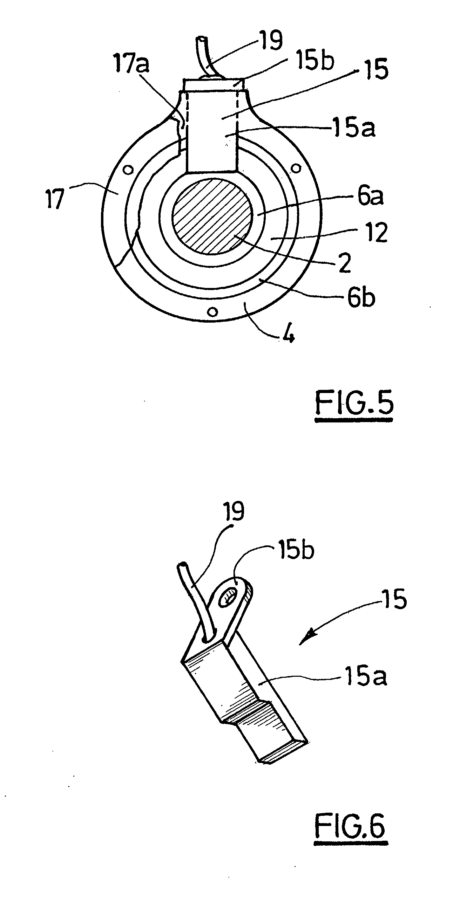

Dans le mode de réalisation représenté sur la figure 6, le capteur 15 comprend d'une part un corps en matière plastique moulé 15a dans lequel les éléments sensibles ou l'ASIC sont intégrés et d'autre part un insert métallique 15b permettant l'association au moyen d'une vis 28 du capteur 15 sur une portée 16 du flasque 27.

Cette réalisation, en mettant en appui le capteur 15 sur les portées 16, 16', permet d'assurer la maîtrise du positionnement des éléments sensibles en regard et à distance d'entrefer du codeur 12.

En outre (voir figure 5), un flasque 17 (représenté partiellement) pourvu d'une ouverture 17a pour que le corps 15a puisse être positionné face au codeur 12 est serré contre la face externe de la bague extérieure 6b par trois vis réparties à 120° les unes des autres afin de bloquer tout déplacement axial du roulement 6. Les déplacements du capteur 15 par rapport au codeur 12 sont empêchés par la vis 28.

En variante, on peut prévoir que le capteur 15 soit associé à la bague fixe 6b du roulement 6 en assurant le positionnement des éléments sensibles en regard et à distance d'entrefer des pistes du codeur 12.

D'autres modes de réalisation de l'association d'un codeur 12 et d'un capteur 15 sur un roulement 6 peuvent être envisagés, notamment ceux décrits dans les documents FR-2 794 504 et FR-2 700 588 issus de la demanderesse.

Pour assurer l'interface d'entrée/sortie des différents signaux électriques, le boîtier 4 est pourvu d'un bornier 18 apte d'une part à alimenter le moteur 1 en courant et d'autre part à alimenter, par l'intermédiaire d'un câble 19, les signaux de sortie A, B, C du capteur 15 dans le dispositif de commande.

Le dispositif de commande comprend en outre un circuit de commutation 20 des courants dans les enroulements de phase du moteur 1.

Le circuit de commutation 20 comprend 2*P*N interrupteurs T1-T6, par exemple formés chacun d'un transistor à effet de champ de type MOSFET fonctionnant à 20 kHz, qui sont disposés en pont de sorte à alimenter les enroulements de phases de façon appropriée.

Les 2*P*N interrupteurs T1-T6 peuvent être actionnés deux à deux suivant 2*P*N états possibles, le passage d'un état à un autre étant commandé par la détection d'une des 2*P*N impulsions du signal C.

Dans le mode de réalisation représenté sur la figure 1, le dispositif de commutation 20 comprend 6 interrupteurs T1-T6 qui permettent d'alimenter les trois enroulements de phase avec respectivement un courant I1, I2 et I3, I1 + I2 + I3 étant égal à 0.

La commande du dispositif de commutation 20, c'est à dire l'actionnement sélectif des interrupteurs T1-T6, est effectuée par un circuit de commande 21 qui :
- à partir du signal C fournit des signaux de commutation de la pluralité d'interrupteurs T1-T6 ; et
- à partir des signaux A, B et en fonction d'une première consigne de courant I* définit une deuxième consigne de courant Iref qui pilote le courant Im alimentant les enroulements de phase du moteur 1.

La consigne de courant I* peut être issue par exemple d'une boucle d'asservissement en vitesse du rotor 2, d'une boucle d'asservissement en position du rotor 2 ou d'une mesure du couple devant être appliqué par le rotor 2 sur l'organe mécanique.

La consigne I* est alimentée dans un circuit électronique 22 qui, à partir de cette consigne, introduit une modulation de la consigne Iref en fonction de la position du rotor issue des signaux A et B, cette modulation étant d'amplitude fonction de I* et en opposition de phase par rapport à la modulation de couple intrinsèque au moteur 1, afin d'obtenir un couple utile du moteur 1 exempt de modulation.

Dans le mode de réalisation représenté, le circuit de commande 21 comprend une boucle de régulation comprenant un régulateur 23, par exemple de type PID (proportionnel intégral dérivé), une commande à largeur variable (PWM) 24 fournissant un signal carré à 20 kHz dont le rapport cyclique est commandé par le régulateur 23 et un comparateur 29 comparant Im à Iref issu du circuit électronique 22.

De façon connue, la boucle de régulation permet, à partir de Iref, de moduler le courant dans les enroulements de phase en fonction de la position du rotor 2 de sorte à obtenir un couple du moteur constamment égale à la consigne I*.

Le circuit de commande 23 peut être réalisé sous la forme d'un seul microprocesseur 25 intégrant au moins une logique de commutation du circuit de commutation 20 qui détermine la succession des ouvertures/fermetures des différents interrupteurs T1-T6. Dans un exemple particulier, la logique de commutation peut être différente en fonction du sens de rotation du rotor 2.

En variante, la boucle de régulation peut être réalisée sous forme analogique.

Selon une réalisation, le circuit de commande 21, en comparant le courant Im alimentant le moteur à la consigne de courant Iref, permet de moduler en largeur et en durée les signaux de commutation par l'intermédiaire d'une fonction logique ET 26.

Ainsi, à chaque détection d'une des 2*P*N impulsions du signal C, deux interrupteurs sont, en fonction de l'état de la logique de commutation, sélectivement fermés de sorte à alimenter les deux enroulements de phase correspondants avec le courant régulé Im.

Les instants de commutation de phases peuvent être prévus lors de la détection du front montant ou descendant de l'impulsion. En variante, et pour améliorer la précision de la commutation, on peut prévoir que le front montant soit utilisé dans un sens de rotation et le front descendant dans l'autre sens.

Le fonctionnement du moteur est le suivant :
- le moteur 1 est alimenté par un courant Im de sorte à permettre la mise en rotation du rotor 2 et donc celle du codeur 12 associé ;
- le capteur 15 délivre les signaux A, B représentatifs notamment de la position du rotor 2 et le signal C sous forme de 6 impulsions par tour ;
- à chaque détection d'une impulsion, le microprocesseur 25 ferme sélectivement deux interrupteurs T1-T6 en fonction de la logique de commutation sélectionnée ;
- les signaux A, B, représentatifs notamment de la position du rotor 2, permettent, en fonction de la première consigne de courant I* et par l'intermédiaire du circuit de commande 21, de piloter le courant Im alimentant le moteur 1 de sorte à limiter les modulations de celui-ci.

Dans un exemple particulier, la logique de commutation est réalisée de sorte que le champ rotorique soit déphasé du champ statorique d'un angle compris entre 60° et 120° de sorte à optimiser le couple fourni par le moteur 1.

## Revendications

1. Moteur à commutation électronique (1) comprenant P phases et N paires de pôles, ledit moteur comprenant :
- un rotor (2) portant les N paires de pôles et un stator (3) portant P bobines formées respectivement d'un enroulement de phase, ledit rotor (2) étant monté en rotation à l'intérieur du stator (3) par l'intermédiaire d'au moins un roulement (5, 6), ledit roulement (5, 6) comprenant une bague fixe (5b, 6b) et une bague tournante (5a, 6a) associée au rotor (2) ; et
- un dispositif de commande de la commutation du courant entre les phases du moteur (1) ;
ledit moteur (1) étant **caractérisé en ce que** :
- un codeur multipolaire circulaire (12) est associé à la bague tournante (6a) d'un roulement (6), ledit codeur (12) comprenant une piste multipolaire principale (12a) et une piste multipolaire de commutation (12b) comprenant 2*P*N singularités (12b1-12b6) équiréparties angulairement, les pistes principale (12a) et de commutation (12b) étant concentriques sur le codeur (12) ; et
- le dispositif de commande comprend :
- un capteur fixe (15) disposé en regard et à distance d'entrefer du codeur (12), ledit capteur (15) comprenant au moins trois éléments sensibles dont au moins deux sont positionnés en regard de la piste principale (12a) de sorte à délivrer des signaux digitaux A, B carrés en quadrature et au moins un est positionné en regard de la piste de commutation (12b) de sorte à délivrer un signal C sous forme de 2*P*N impulsions par tour du codeur (12) ;
- un circuit de commutation (20) des courants dans les enroulements de phase du moteur (1) comportant 2*P*N interrupteurs (T1-T6) ;
- un circuit de commande (21) du circuit de commutation (20) qui :
- à partir du signal C fournit des signaux de commutation des interrupteurs (T1-T6) ; et
- à partir des signaux A, B et en fonction d'une première consigne de courant (I*) définit une deuxième consigne de courant (Iref) qui pilote le courant (Im) alimentant les enroulements de phase du moteur (1).

2. Moteur selon la revendication 1, **caractérisé en ce que** le capteur (15) est associé à la bague fixe (5b) du roulement (5) portant le codeur (12).

3. Moteur selon la revendication 2, **caractérisé en ce que** le circuit de commande (21) comprend une boucle de régulation commandée par la deuxième consigne de courant (Iref) issue d'un circuit électronique (22), ledit circuit de commande (21) étant apte à moduler en largeur et en durée les signaux de commutation par l'intermédiaire d'une fonction logique ET (26).

4. Moteur selon l'une quelconque des revendications 1 à 3, **caractérisé en ce que** le circuit de commande (21) comprend un microprocesseur (25) intégrant au moins une logique de commutation du circuit de commutation (20).

5. Moteur selon l'une quelconque des revendications 1 à 4, **caractérisé en ce que** le codeur (12) est formé d'un anneau magnétique multipolaire sur lequel est aimantée une pluralité de paires de pôles (14) Nord et Sud équirépartis avec une largeur angulaire constante de sorte à former les pistes principale (12a) et de commutation (12b), une singularité magnétique (12b1-12b6) étant formée de deux paires de pôles qui sont différentes des autres.

6. Moteur selon la revendication 5, **caractérisé en ce que** les éléments sensibles sont choisis parmi le groupe comprenant les sondes à effet Hall, les magnétorésistances, les magnétorésistances géantes.

7. Moteur selon l'une quelconque des revendications 1 à 4, **caractérisé en ce que** le codeur (12) est formé d'une cible sur laquelle les pistes de référence (12a) et de commutation (12b) ont été gravées de sorte à former un motif optique analogue à un motif magnétique multipolaire, les éléments sensibles étant alors formés de détecteurs optiques.

8. Moteur selon la revendication 6 ou 7, **caractérisé en ce que** le capteur (15) comprend une pluralité d'éléments sensibles alignés qui sont disposés en regard et à distance d'entrefer de la piste principale (12a).

9. Moteur selon l'une quelconque des revendications 1 à 8, **caractérisé en ce que** le capteur (15) comprend un interpolateur augmentant la résolution des signaux de sortie.

10. Moteur selon l'une quelconque des revendications 1 à 9, **caractérisé en ce que** le capteur (15) est intégré dans un circuit de type ASIC.
